(19) **Europäisches Patentamt**

**European Patent Office**

**Office européen des brevets**

(11) **EP 0 985 902 B1**

(12) **FASCICULE DE BREVET EUROPEEN**

(45) Date de publication et mention
de la délivrance du brevet:
**24.11.2004 Bulletin 2004/48**

(51) Int Cl.⁷: **G01B 9/02**, G01B 11/02,
G01B 11/24, G01B 11/22

(21) Numéro de dépôt: **99402227.5**

(22) Date de dépôt: **10.09.1999**

(54) **Dispositif interférométrique pour relever les caractéristiques de réflexion et/ou de transmission optiques en profondeur d'un objet**

Interferometrische Vorrichtung zum Sichtbarmachung von Optischen Reflexion- und/oder Transmissionscharakteristiken im inneren eines Objektes

Interferometric device for picking up optical subsurface reflexion and/or transmission characteristics of an object

(84) Etats contractants désignés:
**CH DE FR GB LI**

(30) Priorité: **10.09.1998 FR 9811311**

(43) Date de publication de la demande:
**15.03.2000 Bulletin 2000/11**

(73) Titulaire: **CSEM Centre Suisse d'Electronique et
de Microtechnique SA
-Recherche et Développement
2007 Neuchâtel (CH)**

(72) Inventeurs:
• **Seitz, Peter
8902 Urdorf (CH)**
• **Bourquin, Stéphane
8063 Zurich (CH)**
• **Salathe, René-Paul
1024 Ecublens (CH)**

(74) Mandataire: **Caron, Gérard
Cabinet JP Colas
37 avenue Franklin D. Roosevelt
75008 Paris (FR)**

(56) Documents cités:
**WO-A-94/18523          WO-A-95/24621
US-A- 4 309 109          US-A- 5 151 585
US-A- 5 239 364**

• **E.A. SWANSON: "IN VIVO RETINAL IMAGING BY
OPTICAL COHERENCE TOMOGRAPHY"
OPTICS LETTERS, vol. 18, no. 21, 1 novembre
1993 (1993-11-01), pages 1864-1866,
XP002102402**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention est relative à l'acquisition d'images par tomographie optique par laquelle il est possible d'obtenir des images formées par les intensités de rayons lumineux provenant d'un objet à étudier, ces intensités étant fonction de la profondeur dans celui-ci. Ces intensités optiques peuvent être obtenues, soit par réflexion des rayons sur ou dans l'objet, soit par transmission de lumière à travers cet objet.

Plus précisément, l'invention concerne le domaine de l'interférométrie dite "à basse cohérence" et utilise le principe de l'interféromètre de Michelson.

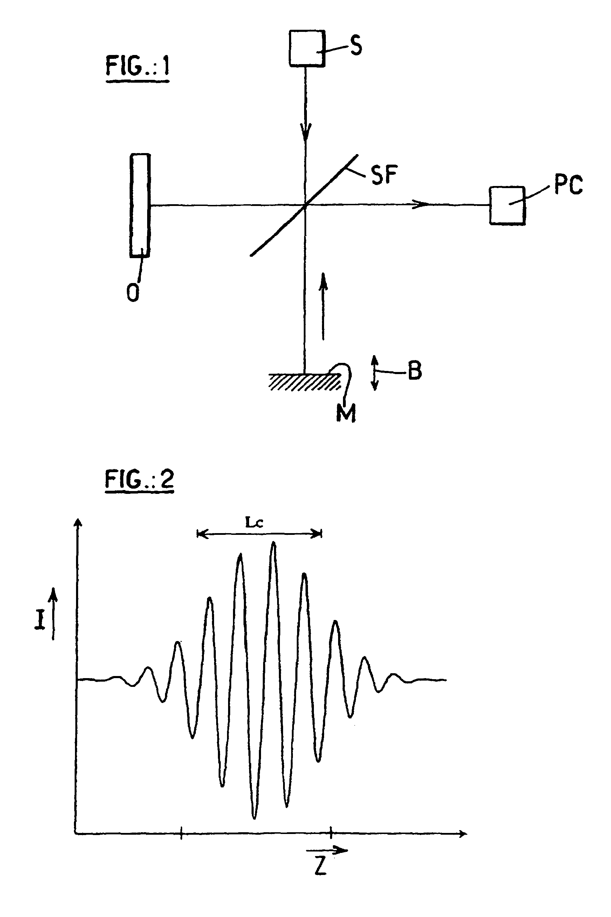

La figure 1 des dessins annexés représente un tel interféromètre. Il comporte une source de lumière S à large bande spectrale ayant par conséquent une faible longueur de cohérence. Le faisceau issu de cette source est conduit sur un séparateur de faisceau SF qui divise le faisceau de la source en un faisceau éclairant un objet O à étudier et un faisceau frappant un miroir M dit de référence.

Dans le cas de cette figure, le faisceau frappant l'objet O et le faisceau tombant sur le miroir M sont respectivement réfléchis et conduits à travers le séparateur SF pour se recombiner et illuminer un photocapteur PC. Ce faisant, ces faisceaux réfléchis interfèrent entre eux constructivement et destructivement en formant une frange d'interférence dans la mesure où la différence des distances optiques parcourues est inférieure à la longueur de cohérence de la source.

Ce dispositif interférométrique permet ainsi d'obtenir une indication par exemple sur la nature de la surface de l'objet. Cependant, tel qu'il vient d'être décrit, cet interféromètre ne permet pas d'obtenir une information tomographique de l'objet, c'est-à-dire une information tomographique de l'objet, c'est-à-dire une information due à la réflexion provenant de plusieurs points internes à l'objet situés en profondeur.

Il est connu par le document WO 95/24621 un dispositif permettant de former une image d'interférence dans le but d'obtenir une analyse du spectre d'une source lumineuse. Ce dispositif comprend, dans un mode de réalisation particulier, un interféromètre de type Michelson, comportant un miroir à échelons, ce miroir décomposant le faisceau émanant de le source lumineuse en une succession de faisceaux ayant chacun une longueur de trajet différente, chacun de ces rayons étant reçu sur un détecteur différent. Cet interféromètre comprend également un simple miroir plan servant à réfléchir la lumière véhiculée dans l'un de ses bras. Toutefois, le document ne divulgue pas comment il est possible à l'aide d'un tel interféromètre d'analyser les propriétés optiques de transparence et/ou réflexion d'un objet.

Dans le document US 4 309 109, on décrit un dispositif permettant de mesurer la distance séparant deux surfaces optiques à l'aide d'un interféromètre de type Michelson, mais qui ne permet pas non plus de fournir une information tomographique en profondeur d'un objet.

Pour obtenir une telle information en profondeur, il est encore connu de procéder à un balayage en profondeur (voir par exemple à cet égard l'article de E. A. Swanson et al. dans la revue OPTICS LETTERS/Vol. 18, No. 21/November 1,1993). Dans ce cas, l'interféromètre est réalisé à l'aide de fibres optiques et de coupleurs, ce qui ne change pas fondamentalement le principe de la mesure. Cependant, pour obtenir une information à partir de différentes profondeurs de l'objet, on procède à des prises de mesure successives en changeant à chaque fois la position du miroir de référence de manière à modifier la longueur du trajet optique dans le bras du dispositif contenant ce miroir (appelé ci-après bras de référence). Sur la figure 1, ce mouvement est symbolisé par la flèche B.

On obtient ainsi un graphe d'interférence tel que représenté sur la figure 2 lorsque l'objet O correspond à une interface où l'intensité lumineuse I frappant le photocapteur PC est portée en ordonnées et la position longitudinale du miroir de référence M en abscisses (appelée par convention position en z qui reflète aussi la position en profondeur du point de l'objet ayant donné lieu à la frange d'interférence considérée). Il est à noter que la résolution de la mesure dépend de la longueur de cohérence de la source S indiquée par la flèche Lc.

Un tel processus de mesure par balayage impliquant plusieurs mesures espacées dans le temps, présente certains inconvénients, car outre le fait que la mesure est nécessairement relativement longue, elle se trouve sérieusement perturbée si l'objet est sujet à des mouvements. Ceci peut être le cas, par exemple dans le domaine médical, qui s'est révélé être une application particulièrement prometteuse, et notamment, lorsque des mesures sont effectuées sur certains constituants de l'oeil, comme la cornée ou la rétine. En outre, pour déplacer le miroir, il faut utiliser un élément mécanique en mouvement ce dont il peut résulter des vibrations et éventuellement une baisse des performances au cours du temps.

Un autre inconvénient de ce processus consiste en ce que la mesure ne porte que sur des points alignés les uns aux autres sur un axe s'étendant en profondeur et définissant la direction du faisceau de lumière réfléchi par l'objet (profil de réflexion en profondeur).

Ainsi, pour obtenir l'image d'une tranche en profondeur de l'objet, il faut effectuer successivement des séries de mesures comme décrites ci-dessus, que l'on peut qualifier d'unidimensionnelles mais déplacées latéralement l'une par rapport à l'autre, pour obtenir des groupes de valeurs d'intensité qu'il faut ensuite traiter pour transformer ces séries de mesures unidimensionnelles en un résultat bidimensionnel représentatif du profil d'une tranche de l'objet. Il est clair que cette procédure aggrave les inconvénients de la mesure unidimensionnelle en termes de durée de mesure et de susceptibilité aux mouvements de l'objet.

L'invention a pour objectif de fournir un dispositif de mesure du genre brièvement décrit ci-dessus qui permette d'obtenir instantanément la totalité du résultat de la mesure que celle-ci porte sur un alignement de points en profondeur, sur une tranche en profondeur de l'objet, voire sur une partie tridimensionnelle de celui-ci.

L'invention a donc pour objet un dispositif interférométrique pour relever les caractéristiques de réflexion et/ou de transmission optiques en profondeur d'un objet par interférométrie, comprenant :

- une source de lumière émettant sur une bande spectrale prédéterminée de part et d'autre d'une longueur d'onde nominale et éclairant ledit objet de manière à créer un faisceau objet provenant de celui-ci,
- des moyens de référence également exposés à ladite source pour créer un faisceau de référence,
- des moyens pour faire interférer lesdits faisceaux objet et de référence; et
- des moyens photocapteurs agencés pour recevoir la lumière due à l'interférence desdits faisceaux objet et de référence, et des moyens d'analyse (MA) pour exploiter les signaux fournis par lesdits moyens photocapteurs,

caractérisé en ce que lesdits moyens de référence sont agencés pour décomposer ledit faisceau de référence en une pluralité de faisceaux élémentaires de référence ayant chacun une longueur de trajet différente, en ce que lesdits moyens photocapteurs comprennent une pluralité d'éléments photocapteurs, et en ce qu'il comprend également des moyens de recombinaison optique pour diriger sur chacun desdits éléments photocapteurs la lumière résultant de l'interférence de l'un desdits faisceaux élémentaires de référence et dudit faisceau objet.

Il résulte de ces caractéristiques que, lors d'une mesure unidimensionnelle, les photocapteurs fournissent ensemble instantanément toutes les informations d'intensité des franges d'interférence provenant de différentes profondeurs de l'objet, autrement dit, on peut par une analyse électronique des signaux de sortie des photocapteurs reconstituer un graphe du type de celui de la figure 2 et ce sans animer d'aucune manière les moyens de référence.

D'autres caractéristiques et avantages de l'invention apparaîtront au cours de la description qui va suivre, donnée uniquement à titre d'exemple et faite en se référant aux dessins annexés sur lesquels :

- la figure 1, déjà décrite, est une représentation schématique d'un interféromètre de Michelson classique pouvant être utilisé pour la tomographie optique;
- la figure 2, également déjà décrite, montre un graphe illustrant le fonctionnement de l'interféromètre classique de la figure 1;

- la figure 3 est un schéma montrant les composants formant un interféromètre tomographique unidimensionnel selon l'invention;
- la figure 3A est un schéma montrant les trajets des faisceaux réfléchis par l'objet O et les moyens de référence M dans l'interféromètre de la figure 3;
- la figure 3B est un schèma analogue à celui de la figure 3A, mais montrant l'illumination de l'objet O et des moyens de référence M par la source S;
- la figure 4 est un schéma dessiné en perspective d'un interféromètre tomographique selon l'invention permettant d'effectuer des mesures bidimensionnelles pour obtenir des informations optiques sur une "tranche" de l'objet;
- les figures 4A et 4B montrent schématiquement deux variantes de réalisation possibles de la source de lumière;
- les figures 5A et 5B sont des vues schématiques, respectivement en vue en élévation et en vue en plan de la figure 4 et selon une représentation alignée des axes concernés, qui ne sert qu'à clarifier la structure du dispositif, des bras de mesure et de source du dispositif interférométrique selon l'invention, afin de mettre en évidence les trajets des rayons lumineux dans ces bras;
- les figures 6A et 6B sont des vues schématiques analogues à celles des figures 5A et 5B, montrant alignés le bras de référence et le bras de source;
- les figures 7A et 7B sont des vues analogues aux précédentes et représentant alignés les bras de mesure et de détection;
- les figures 8A et 8B sont des vues analogues aux précédentes, mais montrant le bras de référence aligné sur le bras de détection;
- la figure 9 est une représentation schématique d'un exemple de disposition de moyens photocapteurs utilisés pour réaliser un dispositif interférométrique tridimensionnel selon l'invention;
- les figures 10A à 10F montrent plusieurs variantes possibles des moyens de référence du dispositif interférométrique selon l'invention;
- la figure 11 montre un schéma de principe d'un dispositif interférométrique travaillant en transmission et
- la figure 12 est un graphe de l'intensité I en fonction de la profondeur dans un objet, pour illustrer une méthode d'analyse particulière pouvant être utilisée pour la mise en oeuvre du dispositif interférométrique selon l'invention.

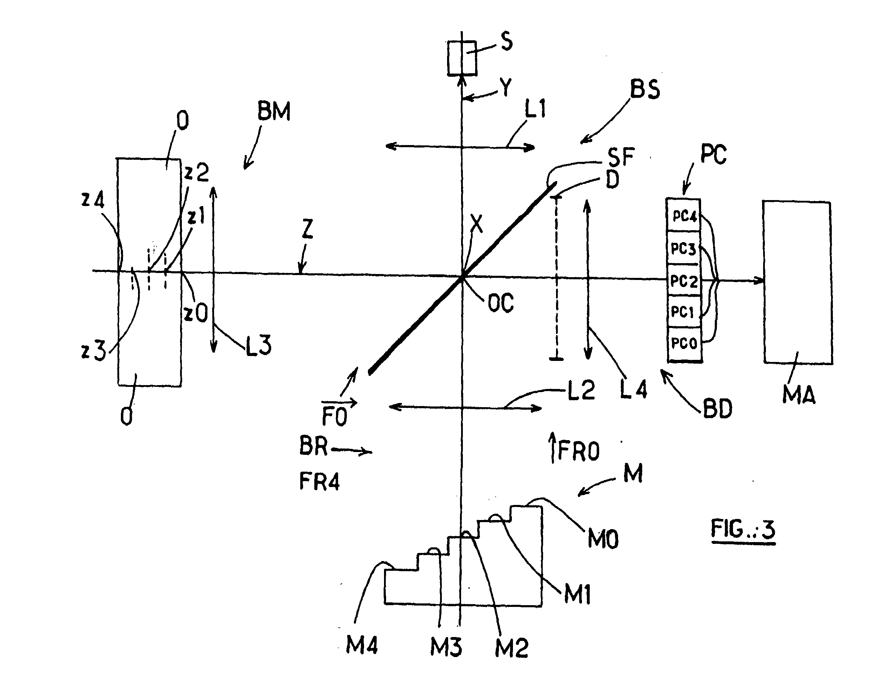

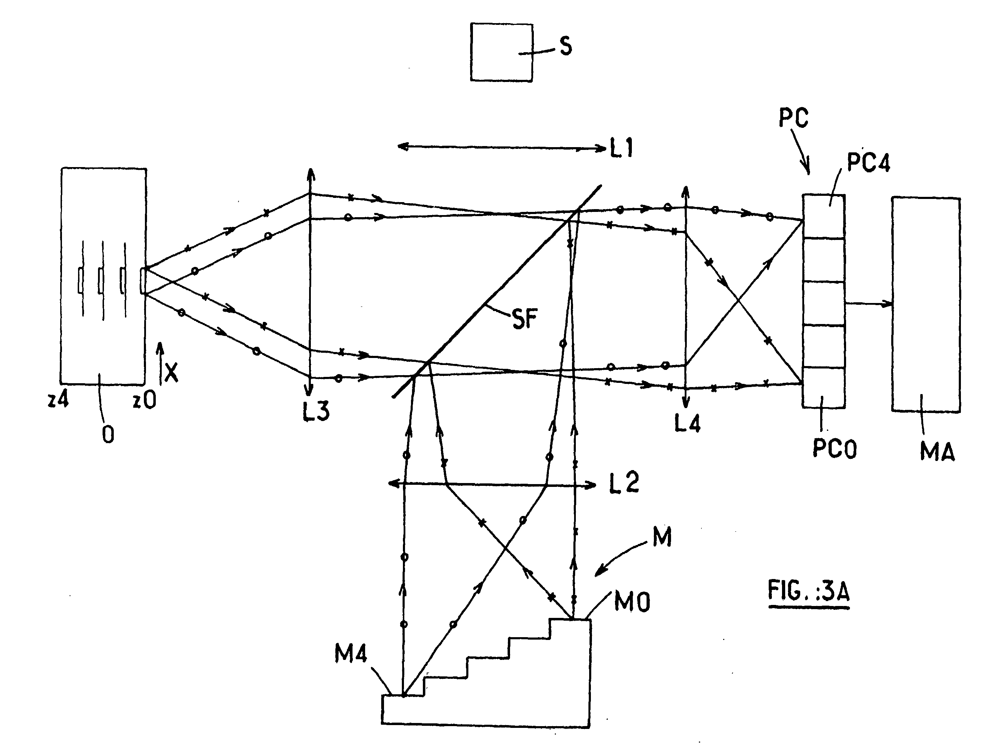

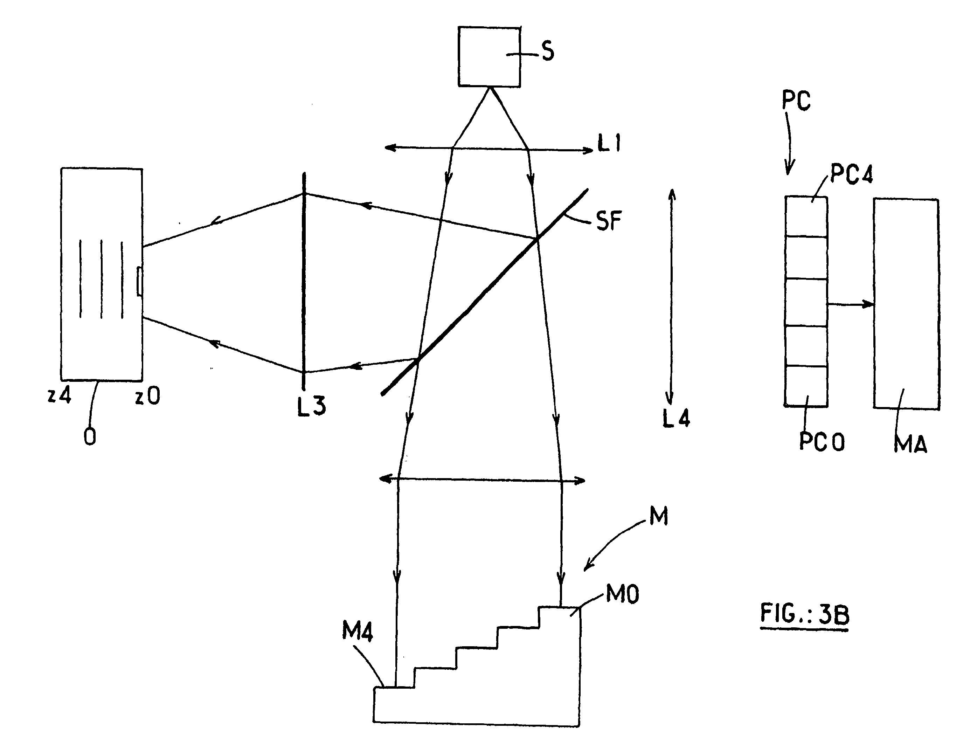

On va maintenant se référer aux figures 3, 3A et 3B, qui représentent un exemple de réalisation d'un système interférométrique selon l'invention permettant de relever les caractéristiques de réflexion en profondeur d'un objet O. Dans cet exemple, le système est dit unidimensionnel car il est capable de ne relever des données de mesure que selon un seul axe Z supposé traverser l'objet. C'est-à-dire dans l'exemple, les données de mesure sont relevées en cinq points z0 à z4, le point z0 étant situé par exemple sur la face avant, et le point z4 sur la face arrière de l'objet. Les points intermédiaires z1, z2 et z3 peuvent être représentatifs d'autres endroits de l'objet où les caractéristiques de réflexion peuvent traduire ses propriétés de structure par exemple. Le relevé des mesures effectuées peut ainsi renseigner l'observateur sur des caractéristiques typiques de l'objet.

Le nombre de points de mesure n'est qu'indicatif, le système pouvant relever simultanément bien davantage de points à la fois par exemple les points z0 à zn. Le nombre cinq a donc été choisi uniquement pour simplifier les dessins.

Le dispositif interférométrique comporte également une source de lumière S à large bande et donc à faible longueur de cohérence. A titre d'exemple, cette source SC comprend une diode superluminescente émettant sur une longueur d'onde de 850 nm avec une largeur de bande de 20 nm. La source peut également comprendre une fibre optique monomode à 850 nm (non représentée), afin de garantir que le faisceau soit émis dans un seul mode spatial.

Le dispositif comprend également un séparateur de faisceau SF, des moyens de référence M et des moyens photocapteurs PC. Ces composants sont agencés de la même façon que sur la figure 1, selon la disposition interférométrique de Michelson.

Pour la commodité de la description, on appellera

- bras de mesure BM, la partie du dispositif s'étendant entre le séparateur SF et l'objet O;
- bras de référence BR, la partie située entre le séparateur SF et les moyens de référence M;
- bras de source BS, la partie située entre le séparateur SF et la source S; et
- bras de détection BD, la partie située entre le séparateur SF et les moyens photocapteurs PC.

Les bras BM et BD sont alignés sur l'axe Z et les bras BR et BS sont alignés sur un axe Y perpendiculaire à l'axe Z et situé dans le même plan que celui-ci (qui est supposé être le plan du dessin de la figure 3). Les axes Y et Z se croisent en le point central OC du système. Un axe X est défini perpendiculairement à ce plan.

Selon l'invention, les moyens de référence M comprennent un miroir présentant une pluralité de miroirs élémentaires M0 à M4, ici au nombre de cinq, et agencés sur un bloc optique unique présentant des échelons dont les faces actives sont disposées perpendiculairement à l'axe Y et parallèlement à l'axe X. Généralement, les moyens de référence M comprennent autant d'échelons que de points de mesure que l'on souhaite obtenir selon l'axe Z dans l'objet O. Les échelons définissent ainsi dans le bras de référence BR autant de faisceaux de référence élémentaires FR0 à FR4 dont les longueurs de trajet sont différentes.

Selon l'invention également, les moyens photocapteurs PC comprennent une rangée d'éléments photocapteurs PC0 à PC4, ici également au nombre de cinq, le nombre dépendant du nombre de points de mesure que l'on veut définir en profondeur dans l'objet O. On notera que les éléments photocapteurs PC0 à PC4 sont agencés côte à côte dans leur rangée parallèlement à l'axe Y.

Par ailleurs, toujours selon l'invention, le système interférométrique comprend un jeu de lentilles L1 à L4 (voir notamment les figures 3A et 3B).

Une première L1 de ces lentilles est collimatrice et prévue dans le bras de source BS. Elle est placée devant la source S et destinée à former une image de celle-ci sur la face de l'objet O à l'aide de la lentille L3 et sur tous les échelons M0 à M4 des moyens de référence M à l'aide de la lentille L2. La distance de la lentille L1 par rapport à la source S est de préférence inférieure à sa distance focale afin de défocaliser le spot lumineux sur l'objet O et sur les moyens de référence M, dans le but d'éclairer l'objet O et l'ensemble des moyens de référence M.

De plus, les lentilles L2, L3 et L4 forment, avec le séparateur SF, des moyens de recombinaison optique. Ils sont déterminés de telle façon qu'à la fois chaque élément photocapteur PC0 à PC4 reçoive de la lumière d'une position (xi, yi) de l'objet O par l'intermédiaire du faisceau objet FO et qu'en outre chaque élément photocapteur PC0 à PC4 ne reçoive de la lumière que d'un seul échelon M0 à M4 des moyens de référence M. En d'autres termes, le couple de lentilles L2, L4 situées respectivement dans le bras de référence BR et dans le bras de détection BD, projette une image des moyens de référence M sur les éléments photocapteurs PC0 à PC4 à raison d'un échelon par élément photocapteur. De son côté, le couple de lentilles L3, L4, situées respectivement dans le bras de mesure BM et le bras de détection BD projette une image de l'objet O sur l'ensemble des photocapteurs PC0 à PC4. Les focales des lentilles L3 et L4 seront de préférence choisies de manière que f3 << f4, ce qui permettra d'obtenir une résolution favorable dans le sens de l'axe X et de l'axe Y. Les faisceaux de référence élémentaires FR0 à FR4 et le faisceau FO ainsi projetés interfèrent les uns avec les autres, de manière à former une image d'interférence qui est reçue par les photocapteurs (PC0 à PC4).

L'obtention de ce résultat apparaît clairement aux spécialistes qui sauront déterminer selon ces règles les caractéristiques des lentilles à utiliser. Pour fixer les idées, les lentilles L1 à L4 peuvent être des lentilles sphériques, de préférence achromatiques.

Il est à noter que selon une variante, les lentilles pourraient être remplacées par des guides de lumière appropriés.

Le système interférométrique selon l'invention que l'on vient de décrire permet, avec une seule rangée d'éléments photocapteurs, d'obtenir par une seule mesure instantanée une donnée par point en profondeur de l'objet (point z0 à z4) respectivement à raison d'une donnée par élément photocapteur. Les signaux recueillis sur les éléments photocapteurs P0 à P4 peuvent être exploités en les traitant dans le dispositif d'exploitation MA, selon les résultats que l'on souhaite finalement obtenir, certaines façons de les traiter étant décrites par la suite.

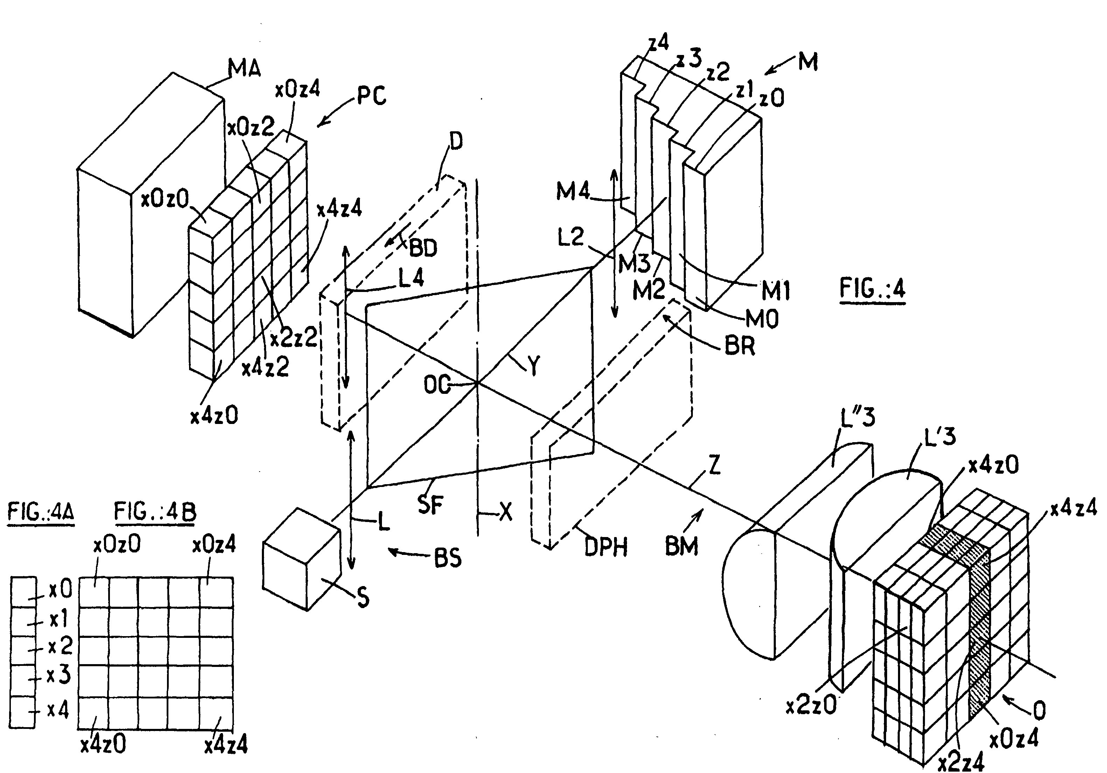

La figure 4 représente un esquisse d'un second exemple de réalisation de l'invention dans lequel le système interférométrique est de type bidimensionnel. Dans le cadre de l'invention, cela veut dire qu'il est capable de fournir des données optiques relatives, non seulement à des points de l'objet situés en profondeur (le long de l'axe Z) mais également selon une autre direction qui, dans l'exemple représenté, est la direction X. En d'autres termes, il devient possible de relever des données sur une "tranche" de l'objet indiquée par des traits obliques sur la figure 4 afin de dégager des données optiques selon un profil.

Le système de mesure de la figure 4 diffère essentiellement de celui de la figure 3 sur trois points (étant entendu que de nouveau, pour simplifier, on a limité le nombre de points relevés à cinq en profondeur et cinq selon la direction X):

- les moyens de référence M s'étendent dans la direction de l'axe X sur une hauteur telle que des faisceaux de référence élémentaires provenant des échelons M0 à M4 puissent être dirigés sur les cinq zones en X des moyens photocapteurs PC;
- les moyens photocapteurs PC comprennent une matrice d'éléments photocapteurs s'étendant selon les directions X et Y (ici naturellement à raison de cinq éléments par direction);
- les moyens de recombinaison comprennent, à la place de la lentille L3 de la figure 3, deux lentilles distinctes L3' et L3'' de forme cylindrique et dont les axes sont respectivement parallèles à la direction X et à la direction Y. Les faces convexes de ces lentilles L3' et L3'' sont tournées vers le séparateur SF. Comme dans le cas de la figure 3, les focales L3' et L4 seront de préférence choisies de manière que f3'<< f4, ce qui permettra d'obtenir une résolution favorable dans la direction Y.

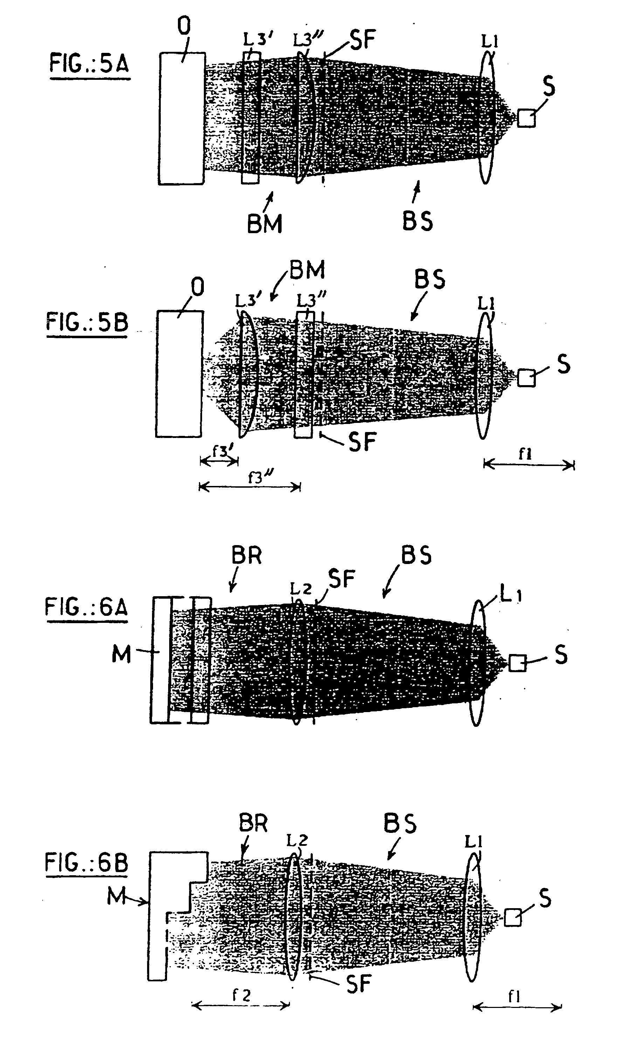

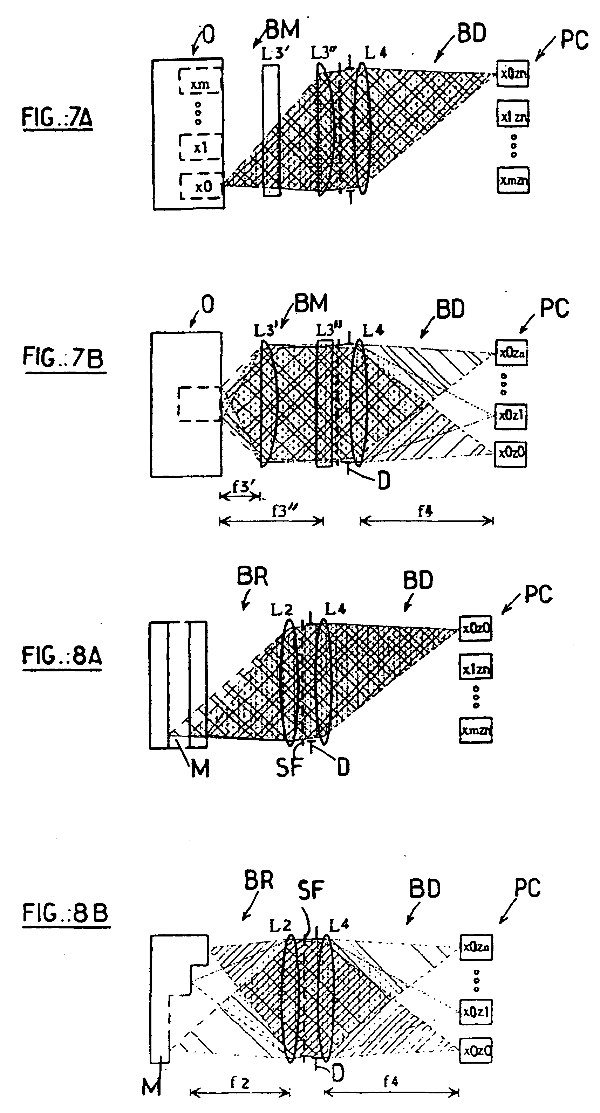

Les figures 5A à 8B permettent d'analyser selon une représentation alignée les bras du dispositif interférométrique respectivement vu en élévation et en plan, selon la figure 4. Les figures montrent les longueurs focales des lentilles L1 à L4 et leurs formes générales ainsi que le cheminement général des faisceaux. Pour ce qui concerne les figures 7A à 8B, on n'a représenté que quelques faisceaux pour ne pas trop charger les figures. Ces figures montrent également qu'un diaphragme D peut être placé dans le bras de détection BD à côté du séparateur SF. L'ouverture de ce diaphragme est choisie de telle manière que le spot de lumière qui arrive sur la surface d'un photocapteur reste à l'intérieur d'un seul cône de diffraction. Cette condition garantit une détection optimale des franges d'interférence. Un tel diaphragme peut également être utilisé dans l'interféromètre de la figure 3, comme représenté.

Les figures 5A à 8B montrent également des repères identifiant les points d'objet et les photocapteurs correspondants avec l'identification des échelons Z0 à Z4 des moyens de référence M.

On notera également que le nombre de points de mesure en profondeur peut être très supérieur à cinq (de z0 à zn), de même que le nombre de points en hauteur selon la direction X (de x0 à xm).

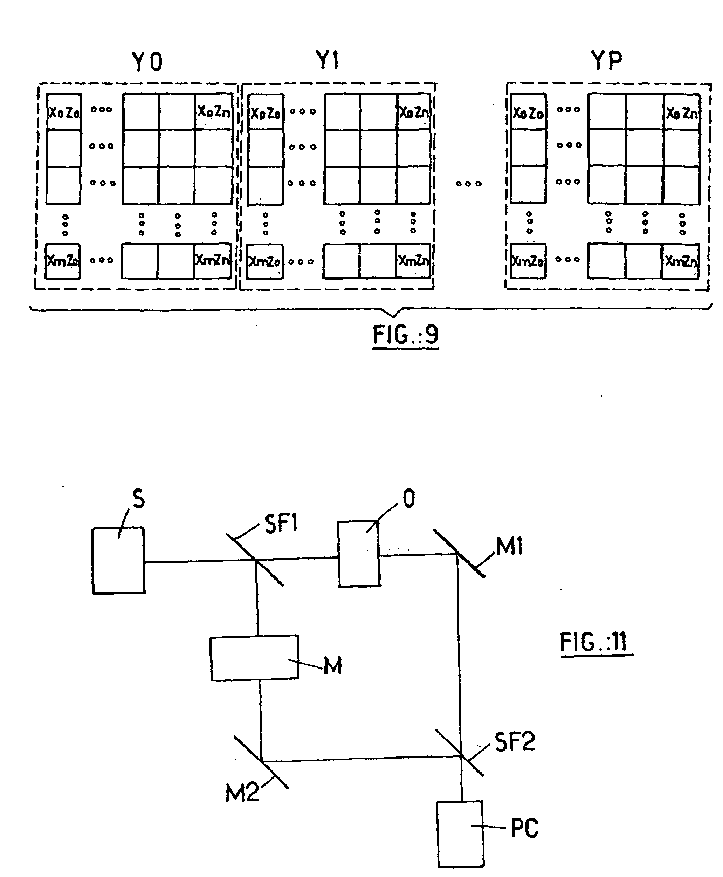

La figure 9 est une représentation schématique d'un exemple de disposition de moyens photocapteurs PC tournés vers le séparateur SF, selon un mode de réalisation particulièrement intéressant de l'invention. En effet, selon une caractéristique particulièrement avantageuse de l'invention, il est possible d'étendre le dispositif interférométrique bidimensionnel à un dispositif tridimensionnel moyennant deux adjonctions extrêmement simples. D'une part, au lieu d'une seule matrice de x0z0 à xmzn d'éléments photocapteurs, on prévoit ici une pluralité de matrices identifiées par les références y0 à yp et de placer ces matrices côte-à-côte selon l'axe Y du dispositif. D'autre part, on prévoit une pluralité de moyens de référence placés côte-à-côte selon l'axe Z du dispositif. Dans ces conditions, chacune des matrices d'éléments photocapteurs recevra l'image d'un plan de réflexion de l'objet, les plans étant agencés parallèlement les uns derrière les autres le long de l'axe Z. On peut ainsi recueillir sur les moyens photocapteurs PC des données optiques dans un volume de l'objet O et ce, instantanément sans qu'aucune manipulation mécanique étalée dans le temps ne soit nécessaire. Le temps de mesure ne sera déterminé que par la rapidité de fonctionnement des moyens électroniques d'analyse MA. Cependant, ceux-ci peuvent incorporer sans aucune difficulté majeure, des moyens de mémoire pour enregistrer les données fournies par les moyens photocapteurs PC avant que l'on n'en entreprenne l'analyse électronique. Peu importe donc que l'objet soit sujet à des mouvements, le temps d'acquisition des moyens photocapteurs et la mise en mémoire étant quasi instantanés. Ceci vaut d'ailleurs tout autant pour les modes de réalisation unidimensionnel et bidimensionnel.

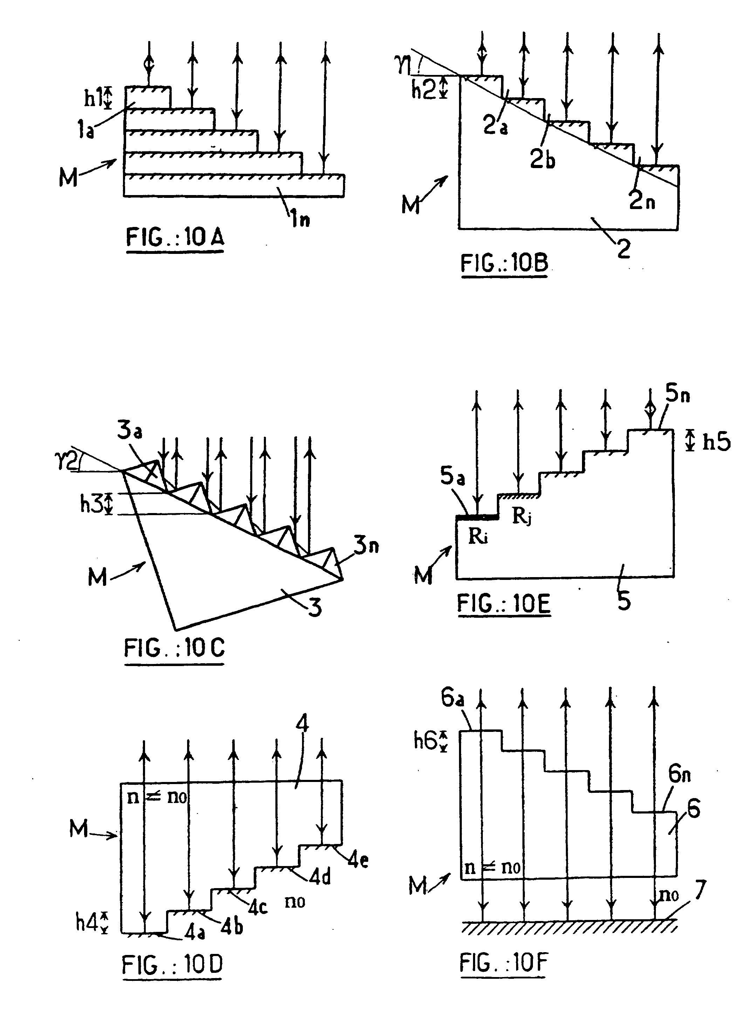

La figure 10A montre une première variante possible des moyens de référence M dans laquelle ceux-ci sont formés par une pluralité de miroirs 1a à 1n superposés et décalés, le pas $\Delta z$ entre deux points adjacents mesurables en profondeur étant déterminé par l'épaisseur h1 des miroirs élémentaires 1a à 1n.

La figure 10B montre une seconde variante dans laquelle les moyens de référence M comprennent un réseau de diffraction à encoches 2 (appelé "blazed grating") dans la littérature anglo-saxonne) dont l'angle $\gamma 1$ définit l'angle ("blazed angle") et dont la dimension h2 des encoches 2a à 2n définit le pas $\Delta z$ qui est la dis-

tance optique entre deux points adjacents mesurables en profondeur dans l'objet O.

Selon la figure 10C, les moyens de référence comprennent une matrice 3 de rétroréflecteurs 3a à 3n, (appelés "corner cubes" dans la littérature anglo-saxonne) en forme de pyramides à base rectangulaire. L'angle γ2 définit l'inclinaison du plan des bases des rétroréflecteurs par rapport à la direction perpendiculaire aux faisceaux élémentaires. La dimension h3 désigne le pas $\Delta z$.

La figure 10D montre une autre forme sous laquelle peuvent être réalisés les moyens de référence. Dans ce cas, un bloc 4 en un milieu transparent est taillé en "escalier" à sa face arrière, des dépôts réfléchissants tournés vers la face opposée du bloc 4 étant faits sur les échelons 4a à 4n ainsi obtenus. Ces échelons forment de la lumière provenant de la source S autant de faisceaux de référence élémentaires. Le pas est obtenu ici grâce à la relation $\Delta z = h4|n-n_0|$, où h4 est la hauteur d'un échelon, n est l'indice de réfraction du milieu du bloc 4 et $n_0$ est l'indice de réfraction du milieu dans lequel se trouve le dispositif interférométrique. L'avantage de cette variante est qu'elle permet, en choisissant un matériau d'indice de réfraction n proche de celui de l'objet O, de diminuer la perte en résolution due à la dispersion de la lumière dans les bras de référence et de mesure de l'interféromètre.

La variante de la figure 10E reprend la forme de celle de la figure 10B. Elle comprend un bloc 5 dont les échelons sont revêtus de dépôts réfléchissants 5a à 5n. Les coefficients de réflexion Ra à Rn de ces dépôts sont choisis en fonction de la nature locale des points en profondeur de l'objet à examiner. Un exemple d'application de tels moyens de référence se rencontre par exemple, pour l'examen en profondeur de l'oeil dont la rétine et la cornée ont des coefficients de réflexion très dissemblables, différences que ces moyens de référence permettent de compenser en choisissant des coefficients de réflexion déterminés pour les dépôts.

La figure 10F représente une variante de moyens de référence qui opèrent par transparence. Dans ce cas, un bloc 6 en un milieu transparent est taillé en escalier pour former des marches 6a à 6n. Ce bloc est placé en alignement de la source S et derrière sa face opposée est disposée une surface plane réfléchissante 7. Dans ce cas, le pas de profondeur $\Delta z$ est égal à celui de la variante de la figure 10D.

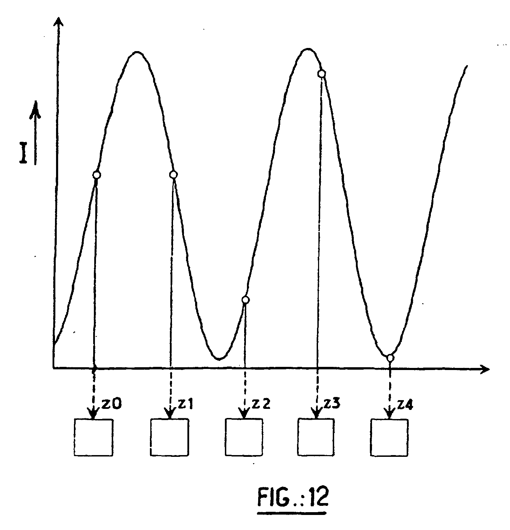

Le bloc 6 peut également être utilisé dans un mode de réalisation du dispositif interférométrique selon l'invention dans lequel les moyens de référence M et l'objet sont traversés par les faisceaux de lumière. Une variante d'un tel dispositif est représentée sur la figure 11 qui ne nécessite pas d'autres commentaires si ce n'est que les résultats obtenus sont semblables à ceux décrits en référence aux figures 3, 4 et 9, respectivement. Il s'agit ici d'interféromètres du type Mach-Zehnder, bien connu des spécialistes. Il comporte deux séparateurs de faisceaux SF1 et SF2 et deux miroirs de renvoi M1 et M2.

Le pas $\Delta z$ correspondant à une frange d'interférence est lié à la longueur d'onde de la source et vaut $\lambda/2$.

L'information utile dans le signal perçu par les éléments photocapteurs est le maximum de l'intensité d'une frange d'interférence. La figure 12 illustre une analyse directe des signaux obtenus qui peut être exécutée par les moyens d'analyse MA. Or, il convient de noter que lors de la mesure, un tel maximum peut ne pas coincider avec un élément photodétecteur de la matrice. Cependant, en disposant d'un nombre d'éléments capteurs par franges supérieur à 1, on peut effectuer par le calcul une interpolation par exemple sur trois points. Il est ainsi possible de calculer l'amplitude d'une frange d'interférence donnée et donc de connaître l'intensité optique maximale réfléchie par l'objet O en une profondeur dont on n'a pas relevé de donnée de mesure. Cette méthode a l'avantage de la simplicité, mais nécessite beaucoup d'éléments photocapteurs.

Une méthode différentielle permet d'en utiliser moins. Pour mettre en oeuvre cette méthode, il convient de prévoir un déphaseur ou un modulateur de phase soit dans le bras de mesure BM, soit dans le bras de référence BR. Ce déphaseur ou modulateur de phase peut être une cellule à cristaux liquides par exemple commandé par une tension électrique. Il est schématisé en pointillés en DPH sur la figure 4, mais il peut également être prévu dans l'interféromètre de la figure 3.

Il faut alors opérer en deux étapes. Une image est acquise sur la matrice d'éléments photocapteurs PC. Puis, un déphasage est produit en appliquant la tension électrique au déphaseur ou modulateur de phase DPH. Une nouvelle image est acquise sur la matrice de photocapteurs PC. Puis, les moyens d'analyse MA effectuent une soustraction sélective des signaux obtenus à partir des deux images successives.

Il en résulte que les moyens d'analyse fournissent un signal non nul seulement aux emplacements Z où il y a interférence. Cette méthode permet de visualiser les franges d'interférence, mais pas d'obtenir forcément le maximum d'intensité d'une frange.

Afin d'être certain d'observer au moins une frange d'interférence, la différence entre la longueur optique pendant la première mesure et celle résultant du déphasage doivent être choisies différentes d'un multiple de $2\pi$. Cette méthode permet d'utiliser seulement 2 à 3 détecteurs par groupe de franges d'interférence, étant entendu que la longueur (étalement spatial) d'un groupe de franges est déterminée par la longueur de cohérence Lc de la source S. Cependant, elle nécessite deux mesures successives, il est vrai très rapprochées dans le temps.

On peut également détecter l'amplitude d'une frange d'interférence par échantillonnage temporel. On prévoit également le déphaseur ou modulateur de phase DPH, soit dans le bras de référence BR soit dans le bras de mesure BM. On relève pour chaque détecteur

trois intensités lumineuses $I_1$, $I_2$ et $I_3$ correspondant à trois déphasages différents successifs par exemple à 0°, à 120° et à 240°. La valeur de la phase est prise par rapport à la longueur d'onde moyenne de la source S. L'intensité atteignant un élément photocapteur donné est donnée par $I_i(\phi) = I_{moy} + I_0\cos(\phi+\phi_0)$, où $\phi_0$ est une constante qui dépend de tous les déphasages introduits par les éléments du dispositif, $I_{moy}=(1/3)\Sigma_i(I_i)$ est la moyenne arithmétique des intensités, et $I_0$ est l'amplitude de la frange d'interférence. Cette dernière est donnée par

$$I_o = [\Sigma_i(I_i - I_{moy})^2]^{\frac{1}{2}}.$$

Les trois méthodes d'analyse qui viennent d'être évoquées ont l'avantage de permettre l'utilisation de matrices de photocapteurs standard, telles qu'une caméra CCD, des matrices actives APS etc.

Le déphaseur ou modulateur de phase DPH peut être utilisé pour moduler la phase de la lumière soit dans le bras de mesure, soit dans le bras de référence d'une manière périodique, par exemple sinusoïdale. En combinaison avec des photocapteurs permettant d'appliquer une synchronisation avec la fréquence de modulation (technique lock-in), on peut réaliser une détection hétérodyne, ce qui permet de diminuer le niveau de bruit jusqu'au niveau de bruit de grenaille (shot-noise) et donc d'améliorer sensiblement la performance du dispositif. Dans ce cas, les moyens d'analyse sont avantageusement réalisés selon la méthode décrite dans l'article de Swanson et al. paru dans "Optics Letters" Jan. 15, 1992, Vol 17, n°2.

La source S peut être unique comme décrit jusqu'ici. Cependant, il est également possible d'utiliser une ligne de sources, voire une matrice. Il en résulte que davantage d'énergie lumineuse devient disponible par élément photocapteur, ce qui permet d'obtenir un meilleur rapport signal/bruit.

Dans le cas d'une colonne de m sources (illustrée sur la figure 4A, si m=5), chaque faisceau illumine une position le long de l'axe X de l'échantillon et éclaire tous les miroirs élémentaires z0 à zn des moyens de référence. Chaque faisceau du bras de mesure BM est recombiné avec sa série de faisceaux du bras de référence BR.

Si on prévoit une matrice de mxn sources (illustrée, en face arrière, sur la figure 4B, si m et n=5), chaque ligne de n faisceaux de sources illumine une position selon l'axe X de l'objet O et éclaire toutes les positions z0 à zn (selon l'axe Z) des moyens de référence, à raison d'une source élémentaire par position. Chaque faisceau du bras de mesure BM est recombiné avec son faisceau de référence associé.

Des sources de lumière appropriées sont des diodes électroluminescentes à émission latérale, des diodes laser, des empilements de matrices de diodes laser ou des diodes ou matrices de diodes laser à cavité verticale. Des diodes électroluminescentes ou d'autres sources émettant de la lumière non cohérente (filament de tungstène) peuvent également être utilisées avec des diaphragmes circulaires ou rectangulaires.

**Revendications**

1. Dispositif interférométrique pour relever les caractéristiques de réflexion et/ou de transmission optiques en profondeur d'un objet par interférométrie, comprenant

   - une source de lumière (S) émettant sur une bande spectrale prédéterminée de part et d'autre d'une longueur d'onde nominale et éclairant ledit objet (O) de manière à créer un faisceau objet (FO) provenant de celui-ci,
   - des moyens de référence (M) également exposés à ladite source (S) pour créer un faisceau de lumière de référence (FR0 à FR4),
   - des moyens (SF) pour faire interférer lesdits faisceaux objet (F0) et de référence (FR0 à FR4);
   - des moyens photocapteurs (PC) agencés pour recevoir la lumière due à l'interférence du faisceau objet (FO) et du faisceau de référence (FR0 à FR4), et
   - des moyens d'analyse (MA) pour exploiter les signaux fournis par lesdits moyens photocapteurs (PC),
   - lesdits moyens de référence (M) étant agencés pour décomposer ledit faisceau de référence en une pluralité de faisceaux de référence élémentaires (FR0 à FR4) ayant chacun une longueur de trajet différente,
   - lesdits moyens photocapteurs (PC) comprenant une pluralité d'éléments photocapteurs (PC0 à PC4; x0z0 à xmzn),
   - **caractérisé en ce que** ledit dispositif interférométrique comprend également des moyens de recombinaison optique (L2, L3, L4; L3', L3'') pour diriger sur chacun desdits éléments photocapteurs (PC0 à PC4; x0z0 à xmzn), la lumière résultant de l'interférence de l'un desdits faisceaux élémentaires de référence (F0 à F4) et du faisceau objet (FO) émanant d'une position (xi, yi) de l'objet, de telle sorte que chacun desdits éléments photocapteurs (PC0 à PC4; x0z0 à xmzn) capte un signal d'interférence représentatif des caractéristiques de réflexion et/ou de transmission optiques d'un point déterminé parmi des points de mesure (Z0, Z1, Z2, Z3, Z4) de l'objet alignés en profondeur par rapport à ladite position (xi, yi).

2. Dispositif interférométrique selon la revendication 1, **caractérisé en ce que** lesdits moyens de référence (M) comprennent, au moins, un bloc optique présentant des échelons (1a à 1n; 2a à 2n; 4a à 4n; 5a à 5n) revêtus d'un dépôt réfléchissant situé en regard de ladite source (S).

**3.** Dispositif interférométrique selon la revendication 2, **caractérisé en ce que** ledit bloc optique comprend une pluralité de lames réfléchissantes superposées (1a à 1n) dont les bords sont décalés pour former lesdits échelons.

**4.** Dispositif interférométrique selon la revendication 2, **caractérisé en ce que** le bloc comprend des échelons ménagés dans sa masse (2a à 2n).

**5.** Dispositif interférométrique selon la revendication 4, **caractérisé en ce que** les échelons sont disposés sur la face du bloc tournée vers ladite source (S).

**6.** Dispositif interférométrique selon la revendication 4, **caractérisé en ce que** le bloc est transparent et **en ce que** les échelons (4a à 4n) sont prévus à la face du bloc située du côté opposé à celle tournée vers ladite source (S).

**7.** Dispositif interférométrique selon l'une quelconque des revendications 1 à 6, **caractérisé en ce que** le coefficient de réflexion des dépôts réfléchissants varie d'un échelon à l'autre (5a à 5n).

**8.** Dispositif interférométrique selon la revendication 1, **caractérisé en ce que** lesdits moyens de référence comprennent, au moins, un bloc optique (3) dont la face tournée vers ladite source (S) présente des aspérités en forme de pyramide (3a à 3n).

**9.** Dispositif interférométrique selon la revendication 1, **caractérisé en ce que** lesdits moyens de référence comprennent, au moins, un bloc optique transparent (6) sur lequel sont ménagés des échelons (6a à 6n) et **en ce que** du côté de ce bloc opposé à ladite face est prévue une surface réfléchissante (7) tournée vers ladite source (S).

**10.** Dispositif interférométrique selon l'une quelconque des revendications 1 à 9, **caractérisé en ce que**, pour effectuer une mesure unidimensionnelle se limitant à relever un jeu de points de mesure alignés en profondeur dans l'objet (O), lesdits éléments photocapteurs (PC0 à PC4) sont agencés en une rangée.

**11.** Dispositif interférométrique selon l'une quelconque des revendications 1 à 9, **caractérisé en ce que**, pour effectuer une mesure bidimensionnelle destinée à relever un jeu de points de mesure alignés à la fois en profondeur dans l'objet (O) et selon un axe (X) perpendiculaire à cet alignement (axe Z), lesdits éléments photocapteurs (x0z0 à x4z4) sont agencés selon une matrice.

**12.** Dispositif interférométrique selon l'une quelconque des revendications 1 à 9, **caractérisé en ce que**, pour effectuer une mesure tridimensionnelle destinée à relever un jeu de points de mesure alignés à la fois en profondeur dans l'objet (O) et selon deux axes perpendiculaires entre eux et audit alignement (Z), lesdits éléments photocapteurs [y0(x0z0 à xmzn) à yp(x0z0 à xmzn)] sont agencés selon une pluralité de matrices placées côte-à-côte (y0 à yp) et lesdits moyens de référence sont agencés selon une pluralité de moyens de référence placés côte-à-côte.

**13.** Dispositif interférométrique selon l'une quelconque des revendications 1 à 12, **caractérisé en ce que** lesdits moyens de recombinaison optique comprennent un premier jeu de lentilles (L2, L4) placées entre ledit séparateur de faisceaux (SF) et lesdits moyens photocapteurs (PC) d'une part et lesdits moyens de référence (M) d'autre part, pour projeter une image desdits moyens de référence (M) sur lesdits éléments photocapteurs (PC0 à PC4; x0z0 à xmzn) à raison d'un faisceau de référence élémentaire par élément photocapteur, et **en ce qu'**il comporte en outre un deuxième jeu de lentilles (L3, L4; L3', L3'', L4) placées entre ledit séparateur de faisceaux (SF) et ledit objet (O) d'une part et lesdits moyens photocapteurs (PC) d'autre part, pour projeter une image de l'objet (O) sur les éléments photocapteurs et **en ce que** les lentilles placées devant lesdits moyens photocapteurs (PC) de chacun des premier et deuxième jeux sont confondues.

**14.** Dispositif interférométrique selon la revendication 13, lorsqu'elle dépend de la revendication 10, **caractérisé en ce que** les lentilles des premier et deuxième jeu de lentilles sont convergentes et sphériques.

**15.** Dispositif interférométrique selon la revendication 13, lorsqu'elle dépend de l'une quelconque des revendications 11 et 12, **caractérisé en ce que** les lentilles (L2, L4) du premier jeu sont de type sphérique et **en ce que** le second jeu comprend, placées entre ledit séparateur de faisceau (SF) et ledit objet (O) deux lentilles (L3'; L3'') convergentes et de forme cylindrique dont les axes sont perpendiculaires entre eux

**16.** Dispositif interférométrique selon l'une quelconque des revendications 1 à 15, **caractérisé en ce que** ladite source (S), lesdits moyens de référence (M), lesdits moyens photocapteurs (PC) et ledit objet (O) sont agencés conformément à l'interféromètre de Michelson, et **en ce que** l'interférence entre lesdits faisceaux de référence élémentaires (FR0 à FR4) et ledit faisceau objet (FO) est obtenue par un séparateur de faisceau (SF) placé au centre (OC) de cet agencement.

17. Dispositif interférométrique selon la revendication 16, **caractérisé en ce qu'**un diaphragme (D) est placé entre ledit séparateur de faisceaux (SF) du côté de celui-ci tourné vers lesdits éléments photocapteurs (PC0 à PC4; x0z0 à xmzn).

18. Dispositif interférométrique selon l'une quelconque des revendications 10 à 13, 16 et 17, **caractérisé en ce qu'**un déphaseur ou un modulateur de phase (DPH) est disposé du côté du séparateur de faisceaux (SF) tourné vers ledit objet (O), ou vers lesdits moyens de référence (M).

19. Dispositif interférométrique selon l'une quelconque des revendications 13 à 18, **caractérisé en ce que** les lentilles dudit deuxième jeu de lentilles (L3, L4) ont des distances focales telles que f3<<f4, dans laquelle f3 est la distance focale de la lentille (L3) placée près de l'objet (O) et f4 est la distance focale de la lentille (L4) placée près desdits éléments photocapteurs (PC0 à PC4; x0z0 à xmzn).

20. Dispositif interférométrique selon la revendication 1, **caractérisé en ce que** ladite source (S), lesdits moyens de référence (M), lesdits moyens photocapteurs (PC) et ledit objet (O) sont agencés conformément à l'interféromètre de Mach-Zehnder, et **en ce que** ledit objet (O) et lesdits moyens de référence (M) sont traversés par les faisceaux objet (O) et de référence (FR0 à FR4).

21. Dispositif suivant l'une quelconque des revendications 1 à 20, **caractérisé en ce que** ladite source (S) comprend un agencement de plusieurs sources élémentaires, de préférence agencées selon une ligne ou une matrice.

22. Dispositif suivant l'une quelconque des revendications 18 à 21, **caractérisé en ce que** ledit déphaseur (DPH) ou ledit modulateur de phase est utilisé pour permettre une détection hétérodyne sur le signal de sortie desdits moyens photocapteurs (PC).

**Patentansprüche**

1. Interferometrische Vorrichtung zum Aufnehmen der optischen Reflexionsund/oder Transmissionscharakteristiken im Inneren eines Objektes durch Interferometrie, mit

- einer Lichtquelle (S), die auf einem vorgegebenes Spektralband beidseitig zu einer Nennwellenlänge emittiert und das Objekt (O) beleuchtet, um einen von diesem kommenden Objektstrahl (FO) zu erzeugen,

- Referenzmitteln (M), die ebenfalls der Lichtquelle (S) ausgesetzt sind, um einen Referenzlichtstrahl (FR0 bis FR4) zu erzeugen,

- Mitteln (SF), um die Objekt- (FO) und Referenz- (FR0 bis FR4) Strahlen zur Interferenz zu bringen,

- Fotoaufnehmermittel (PC), die so angeordnet sind, dass sie das Licht aufgrund der Interferenz des Objektstrahls (FO) und des Referenzstrahls (FR0 bis FR4) empfangen, und

- Analysemitteln (MA) zum Auswerten der von den Fotoaufnehmermitteln (PC) gelieferten Signale,

- wobei die Referenzmittel (M) so angeordnet sind, dass sie den Referenzstrahl in eine Anzahl elementarer Referenzstrahlen (FR0 bis FR4), die jeweils eine unterschiedliche Bahnlänge haben, zerlegen,

- wobei die Fotoaufnehmermittel (PC) eine Anzahl Fotoaufnehmerelemente (PC0 bis PC4; x0z0 bis xmzn) aufweisen,

**dadurch gekennzeichnet, dass** die interferometrische Vorrichtung ferner optische Rekombinationsmittel (L2, L3, L4; L3', L3") aufweist, um auf jeden der Fotoaufnehmerelemente (PC0 bis PC4; x0z0 bis xmzn) das Licht zu lenken, das aus der Interferenz des einen der elementaren Referenzstrahlen (F0 bis F4) und des von einer Position (xi, yi) des Objektes ausgehenden Objektstrahls (F0) resultiert, derart, dass jedes der Fotoaufnehmerelemente (PC0 bis PC4; x0z0 bis xmzn) ein Interferenzsignal auffängt, das repräsentativ für die optischen Reflexions- und/oder Transmissionscharakteristiken eines bestimmten Punktes unter Messpunkten (Z0, Z1, Z2, Z3, Z4) des Objektes ist, welche im Inneren bezüglich der besagten Position (xi, yi) ausgerichtet sind.

2. Interferometrische Vorrichtung nach Anspruch 1, **dadurch gekennzeichnet, dass** die Referenzmittel (M) mindestens einen optischen Block aufweisen, der Stufengitter (1a bis 1n; 2a bis 2n; 4a bis 4n; 5a bis 5n) bildet, welche von einer reflektierenden Schicht überzogen sind, die gegenüber der Lichtquelle (S) angeordnet ist.

3. Interferometrische Vorrichtung nach Anspruch 2, **dadurch gekennzeichnet, dass** der optische Block eine Anzahl überlagerter reflektierender Streifen (1a bis 1n) aufweist, deren Ränder versetzt sind, um die Stufengitter zu bilden.

**4.** Interferometrische Vorrichtung nach Anspruch 2, **dadurch gekennzeichnet, dass** der Block in sein Material (2a bis 2n) eingearbeitete Stufengitter aufweist.

**5.** Interferometrische Vorrichtung nach Anspruch 4, **dadurch gekennzeichnet, dass** die Stufengitter auf der der Lichtquelle (S) zugewandten Fläche des Blockes angeordnet sind.

**6.** Interferometrische Vorrichtung nach Anspruch 4, **dadurch gekennzeichnet, dass** der Block transparent ist und dass die Stufengitter (4a bis 4n) an der Fläche des Blocks vorgesehen sind, die auf der Seite liegt, die zu der der Lichtquelle (S) zugewandten Seite entgegengesetzt ist.

**7.** Interferometrische Vorrichtung nach einem der Ansprüche 1 bis 6, **dadurch gekennzeichnet, dass** der Reflexionsgrad der reflektierenden Schichten sich von einem Stufengitter zum anderen (5a bis 5n) ändert.

**8.** Interferometrische Vorrichtung nach Anspruch 1, **dadurch gekennzeichnet, dass** die Referenzmittel mindestens einen optischen Block (3) aufweisen, dessen der Lichtquelle (S) zugewandte Fläche pyramidenförmige Rauheiten (3a bis 3n) aufweist.

**9.** Interferometrische Vorrichtung nach Anspruch 1, **dadurch gekennzeichnet, dass** die Referenzmittel mindestens einen transparenten optischen Block (6) aufweisen, auf dem Stufengitter (6a bis 6n) freigelegt sind, und dass auf der dieser Fläche gegenüberliegenden Seite dieses Blockes eine reflektierende Oberfläche (7) vorgesehen ist, die der Lichtquelle (S) zugewandt ist.

**10.** Interferometrische Vorrichtung nach einem der Ansprüche 1 bis 9, **dadurch gekennzeichnet, dass** zum Durchführen einer eindimensionalen Messung, die sich darauf beschränkt, eine Gruppe von im Inneren des Objektes (O) ausgerichteten Messpunkten aufzunehmen, die Fotoaufnehmerelemente (PC0 bis PC4) in einer Reihe angeordnet sind.

**11.** Interferometrische Vorrichtung nach einem der Ansprüche 1 bis 9, **dadurch gekennzeichnet, dass** zum Durchführen einer zweidimensionalen Messung, die dazu bestimmt ist, eine Gruppe von Messpunkten aufzunehmen, die gleichzeitig im Inneren des Objektes (O) ausgerichtet sind und auf einer zu dieser Ausrichtung (Achse Z) senkrechten Achse (X) liegen, die Fotoaufnehmerelemente (x0z0 bis x4z4) in einer Matrix angeordnet sind.

**12.** Interferometrische Vorrichtung nach einem der Ansprüche 1 bis 9, **dadurch gekennzeichnet, dass** zum Durchführen einer dreidimensionalen Messung, die dazu bestimmt ist, eine Gruppe von Messpunkten aufzunehmen, die gleichzeitig im Inneren des Objektes (O) ausgerichtet sind und auf zwei zwischen sich und dieser Ausrichtung (Z) senkrechten Achsen liegen, die Fotoaufnehmerelemente [y0(x0z0 bis xmzn) bis yp(x0z0 bis xmzn)] in mehreren Seite an Seite liegenden Matrices (y0 bis yp) angeordnet sind und die Referenzmittel gemäß einer Anzahl von Seite an Seite liegenden Referenzmitteln angeordnet sind.

**13.** Interferometrische Vorrichtung nach einem der Ansprüche 1 bis 12, **dadurch gekennzeichnet, dass** die optischen Rekombinationsmittel eine erste Gruppe von Linsen (L2, L4) aufweisen, die zwischen dem Strahlseparator (SF) und den Fotoaufnehmermitteln (PC) einerseits und den Referenzmitteln (M) andererseits angeordnet sind, um ein Bild der Referenzmittel (M) auf die Fotoaufnehmerelemente (PC0 bis PC4; x0z0 bis xmzn) mit einem elementaren Referenzstrahl pro Fotoaufnehmerelement zu projizieren, und dass sie ferner eine zweite Gruppe von Linsen (L3, L4; L', L3", L4) aufweisen, die zwischen dem Strahlseparator (SF) und dem Objekt (O) einerseits und den Fotoaufnehmermitteln (PC) andererseits angeordnet sind, um ein Bild des Objektes (O) auf die Fotoaufnehmerelemente zu projizieren, und dass die vor den Fotoaufnehmermitteln (PC) jeder der ersten und zweiten Gruppe angeordneten Linsen zusammenfallen.

**14.** Interferometrische Vorrichtung nach Anspruch 13 in Abhängigkeit von Anspruch 10, **dadurch gekennzeichnet, dass** die Linsen der ersten und zweiten Gruppe von Linsen konvergent und sphärisch sind.

**15.** Interferometrische Vorrichtung nach Anspruch 13 in Abhängigkeit von einem der Ansprüche 11 und 12, **dadurch gekennzeichnet, dass** die Linsen (L2, L4) der ersten Gruppe vom sphärischen Typ sind und dass die zweite Gruppe zwei zwischen dem Strahlseparator (SF) und dem Objekt (O) angeordnete konvergente und zylindrische Linsen (L3'; L3") aufweist, deren Achsen senkrecht aufeinander stehen.

**16.** Interferometrische Vorrichtung nach einem der Ansprüche 1 bis 15, **dadurch gekennzeichnet, dass** die Lichtquelle (S), die Referenzmittel (M), die Fotoaufnehmermittel (PC) und das Objekt (O) entsprechend dem Michelson-Interferometer angeordnet sind und dass die Interferenz zwischen den elementaren Referenzstrahlen (FR0 bis FR4) und dem Objektstrahl (FO) durch einen Strahlseparator (SF) erhalten wird, der in der Mitte (OC) dieser Anordnung angeordnet ist.

**17.** Interferometrische Vorrichtung nach Anspruch 16, **dadurch gekennzeichnet, dass** eine Membran (D) zwischen dem Strahlseparator (SF) auf seiner den Fotoaufnehmerelementen (PC0 bis PC4; x0z0 bis xmzn) zugewandten Seite angeordnet ist.

**18.** Interferometrische Vorrichtung nach einem der Ansprüche 10 bis 13, 16 und 17, **dadurch gekennzeichnet, dass** ein Phasenschieber oder ein Phasenmodulator (DPH) auf derjenigen Seite des Strahlseparators (SF) angeordnet ist, die dem Objekt (O) oder den Referenzmitteln (M) zugewandt ist.

**19.** Interferometrische Vorrichtung nach einem der Ansprüche 13 bis 18, **dadurch gekennzeichnet, dass** die Linsen der zweiten Gruppe von Linsen (L3, L4) Brennweiten wie f3<<f4 haben, von denen f3 die Brennweite der in der Nähe des Objektes (O) angeordneten Linse (L3) ist und f4 die Brennweite der in der Nähe der Fotoaufnehmerelemente (PC0 bis PC4; x0z0 bis xmzn) angeordneten Linse (L4) ist.

**20.** Interferometrische Vorrichtung nach Anspruch 1, **dadurch gekennzeichnet, dass** die Lichtquelle (S), die Referenzmittel (M), die Fotoaufnehmermittel (PC) und das Objekt (O) entsprechend dem Mach-Zehnder-Interferometer angeordnet sind und dass das Objekt (O) und die Referenzmittel (M) von den Objekt- (O) und Referenz- (FR0 bis FR4) Strahlen durchquert werden.

**21.** Vorrichtung nach einem der Ansprüche 1 bis 20, **dadurch gekennzeichnet, dass** die Lichtquelle (S) eine Anordnung mehrerer Elementarquellen aufweist, die vorzugsweise auf einer Linie oder in einer Matrix angeordnet sind.

**22.** Vorrichtung nach einem der Ansprüche 18 bis 21, **dadurch gekennzeichnet, dass** der Phasenschieber (DPH) oder der Phasenmodulator dazu verwendet wird, eine dem Ausgangssignal der Fotoaufnehmermittel (PC) überlagerte Detektion zu ermöglichen.

**Claims**

**1.** An interferometric device for recording the depth mode optical reflection and/or transmission characteristics of an object by interferometry, comprising

- a light source (S) emitting over a predetermined spectral bandwidth either side of a nominal wavelength and lighting said object (O) to create an object beam (FO) originating from that object,

- reference means (M) also exposed to said source (S) to create a reference light beam (FR0 to FR4),

- means (SF) for making said object beam (FO) and reference beam (FR0 to FR4) interfere;

- photodetector means (PC) arranged to receive the light due to the interference of said object beam (FO) and said reference beam (FR0 to FR4), and

- analysis means (MA) for analyzing the signals supplied by said photodetector means (PC),

- wherein said reference means (M) are arranged to split said reference beam into a plurality of individual reference beams (FR0 to FR4), each having a different path length,

- wherein said photodetector means comprise a plurality of photodetector cells (PC0 to PC4; x0z0 to xmzn), and

- which also comprises optical recombination means (L2, L3, L4, L3', L3") to steer to each of said photodetector cells (PC0 to PC4; x0z0 to xmzn) the light resulting from the interference of one of said individual reference beams (F0 to F4) and said object beam (F0) emanating from a position (xi, yi) of said object, so that each of said photodetector cells (PC0 to PC4; x0z0 to xmzn) detects an interference signal representative of the optical reflection and/or transmission characteristics of a given point among measuring points (Z0, Z1, Z2, Z3, Z4) of said object aligned depthwise with respect to the said position (xi, yi).

**2.** The interferometric device claimed in claim 1, wherein said reference means (M) at least comprise one optical block with steps (1a to 1n; 2a to 2n; 4a to 4n; 5a to 5n) coated with a reflecting deposit situated in line with said source (S).

**3.** The interferometric device claimed in claim 2, wherein said optical block comprises a plurality of overlaid reflecting blades (1a to 1n), the edges of which are staggered to form said steps.

**4.** The interferometric device claimed in claim 2, wherein the block comprises steps (2a to 2n) cut out of its bulk.

**5.** The interferometric device claimed in claim 4, wherein the steps are disposed on the face of the block turned toward said source (S).

**6.** The interferometric device claimed in claim 4, wherein the block is transparent and the steps (4a to 4n) are provided on the face of the block located on the side opposite that turned toward said source (S).

7.  The interferometric device claimed in anyone of claims 1 to 6, wherein the reflection coefficient of the reflecting deposits varies from one step to the next (5a to 5n).

8.  The interferometric device claimed in claim 1, wherein said reference means at least comprise one optical block (3) in which the face turned toward said source (S) has pyramid-shaped protruberances (3a to 3n).

9.  The interferometric device claimed in claim 1, wherein said reference means at least comprise one transparent optical block (6) on which are arranged steps (6a to 6n) and wherein the side of this block opposite said face has a reflecting surface (7) turned toward said source (S).

10.  The interferometric device claimed in anyone of claims 1 to 9, wherein, to perform a one-dimensional measurement limited to recording a set of measurement points aligned depthwise within the object (O), said photodetector cells (PC0 to PC4) are arranged in a row.

11.  The interferometric device claimed in anyone of claims 1 to 9, wherein, to perform a two-dimensional measurement intended to record a set of measurement points aligned both depthwise within the object (O) and along an axis (X) perpendicular to that alignment (axis Z), said photodetector cells (x0z0 to x4z4) are arranged in an array.

12.  The interferometric device claimed in anyone of claims 1 to 9, wherein, to perform a three-dimensional measurement intended to record a set of measurement points aligned both depthwise within the object (O) and along two axes perpendicular to each other and to said alignment (Z), said photodetector cells [y0(x0z0 to xmzn) to yp(x0z0 to xmzn)] are arranged according to a plurality of arrays placed side by side and said reference means are arranged according to a plurality of reference means placed side by side.

13.  The interferometric device claimed in anyone of claims 1 to 12, wherein said optical recombination means comprise a first set of lenses (L2, L4) placed between said beam splitter (SF) and said photodetector means (PC) on the one side and said reference means (M) on the other side, to project an image of said reference means (M) onto said photodetector cells (PC0 to PC4; x0z0 to xmzn), with one individual reference beam for each photodetector cell, and which furthermore comprise a second set of lenses (L3, L4; L3', L3", L4) placed between said beam splitter (SF) and said object (O) on the one side and said photodetector means (PC) on the other side, to project an image of the object (O) onto the photodetector cells, and wherein the lenses placed in front of said photodetector means (PC) of each of the first and second sets are combined.

14.  The interferometric device claimed in claim 13, when it depends on claim 10, wherein the lenses of the first and second sets of lenses are convergent and spherical.

15.  The interferometric device claimed in claim 13, when it depends on either claim 11 or claim 12, wherein -the lenses (L2, L4) of the first set are spherical and wherein the second set comprises, placed between said beam splitter (SF) and said object (O), two lenses (L3'; L3"), convergent and cylindrical in shape, the axes of which are perpendicular to each other.

16.  The interferometric device claimed in anyone of claims 1 to 15, wherein said source (S), said reference means (M), said photodetector cells (PC) and said object (O) are arranged according to the Michelson interferometer, and wherein the interference between said individual reference beams (FR0 to FR4) and said object beam (FO) is obtained by a beam splitter (SF) placed at the center (OC) of this arrangement.

17.  The interferometric device claimed in claim 16, wherein a diaphragm (D) is placed between said beam splitter (SF) on the side of the latter turned toward said photodetector cells (PC0 to PC4; x0z0 to xmzn).

18.  The interferometric device claimed in anyone of claims 10 to 13, 16 and 17), wherein a phase shifter or phase modulator (DPH) is disposed on the side of the beam splitter (SF) turned toward said object (O), or toward said reference means (M).

19.  The interferometric device claimed in anyone of claims 13 to 18, wherein said lenses of said second set of lenses (L3, L4) have focal distances such that $f3 \ll f4$, in which f3 is the focal distance of the lens (L3) placed close to the object (O) and f4 is the focal distance of the lens (L4) placed close to said photodetector cells (PC0 to PC4; x0z0 to xmzn).

20.  The interferometric device claimed in claim 1, wherein said source (S), said reference means (M), said photodetector means (PC) and said object (O) are arranged according to the Mach-Zehnder interferometer, and wherein said object (O) and said reference means (M) are traversed by the object beam (O) and reference beam (FR0 to FR4).

21.  A device claimed in anyone of claims 1 to 20, wherein said source (S) comprises an arrangement of several individual sources, preferably arranged in a line or array formation.

22. The device claimed in anyone of claims 18 to 21, wherein said phase shifter (DPH) or said phase modulator is used to enable heterodyne detection on the output signal from said photodetector means (PC).

FIG.:1

S

SF

PC

O

B

M

FIG.:2

Lc

I

Z

FIG.: 3

EP 0 985 902 B1

FIG.:3A

FIG.: 3B

EP 0 985 902 B1

FIG.:4

FIG.:4A

FIG.:4B

FIG.: 5A

FIG.: 5B

FIG.: 6A

FIG.: 6B

FIG.:7A

FIG.:7B

FIG.:8A

FIG.:8B

FIG.:9

FIG.:11

FIG.: 10 A

FIG.: 10B

FIG.: 10 C

FIG.: 10E

FIG.: 10 D

FIG.: 10 F

FIG.:12